# EUROPÄISCHE PATENTANMELDUNG

(11) **EP 2 607 817 A1**
(43) Veröffentlichungstag der Anmeldung: **26.06.2013**
(21) Anmeldenummer: 11195593.6
(22) Anmeldetag: 23.12.2011
(51) Int. Cl.: F24J 2/52

(54) **Schweißlaschenelement, Trägerelement sowie Befestigungssystem für eine Photovoltaikanlage**

(71) Anmelder: Sika Technology AG, 6340 Baar (CH)
(72) Erfinder: Meier, Heinz, 8032 Zürich (CH); Bleibler, Alexander, 8406 Winterthur (CH); Rohrer, Hans, 6072 Sachseln (CH); Flück, Armin, 6064 Kerns (CH)
(74) Vertreter: Sika Patent Attorneys

(57) **Zusammenfassung**

Die vorliegende Erfindung betrifft ein Schweißlaschenelement (100, 100', 1100, 2100, 3100, 4100), insbesondere ein Schweißlaschenelement (100, 100', 1100, 2100, 3100, 4100) für ein Befestigungssystem (10) für eine Photovoltaikanlage, mit wenigstens einem Grundplattenelement (110, 1110, 2110, 3110, 4110) und wenigstens einem Verrastungselement (120, 130, 1120, 2120, 3120, 4120), wobei das Verrastungselement (120, 130, 1120, 2120, 3120, 4120) wenigstens einen ersten Abschnitt (122, 132, 1122, 2122, 3122, 4122) und wenigstens einen zweiten Abschnitt (125, 135, 1125, 2125, 3125, 4125) aufweist, wobei der erste Abschnitt (122, 132, 1122, 2122, 3122, 4122) grundplattenelementseitig angeordnet ist und wobei der erste Abschnitt (122, 132, 1122, 2122, 3122, 4122) eine erste Breite bezogen auf den Querschnitt aufweist, wobei der zweite Abschnitt (125, 135, 1125, 2125, 3125, 4125) kopfseitig des Verrastungselements (120, 130, 1120, 2120, 3120, 4120) angeordnet ist und wobei der zweite Abschnitt (125, 135, 1125, 2125, 3125, 4125) eine zweite Breite bezogen auf den Querschnitt aufweist, wobei die zweite Breite eine größere Ausdehnung hat als die erste Breite. Des Weiteren betrifft die vorliegende Erfindung ein Trägerelement (200, 200', 1200, 2200, 3200, 4200) für ein Befestigungssystem (10) einer Photovoltaikanlage, ein Befestigungssystem (10) für eine Photovoltaikanlage sowie ein Verfahren zur Montage eines Befestigungssystems (10) für eine Photovoltaikanlage.

## Beschreibung

Die Erfindung betrifft ein Schweißlaschenelement für ein Befestigungssystem für eine Photovoltaikanlage, ein Trägerelement für ein Befestigungssystem für eine Photovoltaikanlage, ein Befestigungssystem für eine Photovoltaikanlage sowie ein Verfahren zur Montage eines Befestigungssystems für eine Photovoltaikanlage.

Das Aufbringen von Solarzellen auf Dachbahnen über Klebstoffe ist aus dem Stand der Technik bekannt. Der Nachteil dieser Art von Befestigung von Solarzellen ist jedoch, dass sich die Solarzellen, insbesondere aufgrund von mechanischen Spannungen von den Dachbahnen lösen und sich dazwischen Hohlräume bilden können. Das nachfolgende Eindringen von Feuchtigkeit in diese Hohlräume wirkt sich dabei besonders nachteilig auf den Verbund, insbesondere durch Schädigung der Klebstoffe, von Solarzelle und Dachbahn aus und fördert das weitere Ablösen der Solarzelle von der Dachbahn. Ferner ist eine derartige Befestigung nicht für unebene Untergründe geeignet.

Des Weiteren ist zu beachten, dass der verwendete Klebstoff äußeren Einflüssen wie Wettereinflüssen und UV-Strahlung ausgesetzt ist, wobei diese äußeren Einflüsse den Klebstoff mit der Zeit schädigen können und dadurch der Verbund weiter geschwächt wird.

Darüber hinaus ist zu beachten, dass in Fällen, in denen die Solarzellen etwa durch Verkleben direkt auf der Dachmembran angebracht werden, die Solarzellen in hohem Maß mechanischen Belastungen ausgesetzt werden, die zu Beschädigungen der Solarzellen führen können.

Aus der WO 2011/141276 A2 ist bereits ein Photovoltaik-System mit einem keilförmigen Träger sowie einer Solarzelle bekannt, bei der der keilförmige Träger mittels eines Verbindungsmittels zur Herstellung einer punktförmigen Verbindung mit der Dachoberfläche befestigt wird.

Es ist daher die Aufgabe der vorliegenden Erfindung, ein Schweißlaschenelement, ein Trägerelement sowie ein Befestigungssystem für eine Photovoltaikanlage der eingangs genannten Art in vorteilhafter Weise weiterzubilden, insbesondere dahingehend, dass eine Installation der Photovoltaikanlage auf einer Dachbahn einfach und sicher sowie mit langer Standzeit ermöglicht werden kann.

Diese Aufgabe wird erfindungsgemäß gelöst durch ein Schweißlaschenelement für ein Befestigungssystem einer Photovoltaikanlage mit den Merkmalen des Anspruchs 1. Danach ist vorgesehen, dass das Schweißlaschenelement mit wenigstens einem Grundplattenelement und wenigstens einem Verrastungselement versehen ist, wobei das Verrastungselement wenigstens einen ersten Abschnitt und wenigstens einen zweiten Abschnitt aufweist, wobei der erste Abschnitt grundplattenelementseitig angeordnet ist und wobei der erste Abschnitt eine erste Breite bezogen auf den Querschnitt aufweist, wobei der zweite Abschnitt kopfseitig des Verrastungselements angeordnet ist und wobei der zweite Abschnitt eine zweite Breite bezogen auf den Querschnitt aufweist, wobei die zweite Breite eine größere Ausdehnung hat als die erste Breite.

Das Schweißlaschenelement ist insbesondere ein Schweißlaschenelement für ein Befestigungssystem für eine Photovoltaikanlage.

Derartige, erfindungsgemäße Befestigungssysteme einer Photovoltaikanlage bestehen vorzugsweise aus wenigstens einem Schweißlaschenelement und wenigstens einem Trägerelement, dass auch Mount genannt wird. Ein Schweißlaschenelement kann als ein im Wesentlichen flaches und/oder streifenartiges Profilelement ausgebildet sein, dessen Unterseite auf der Dachoberfläche, z. B. der Dachbahn aufgelegt und dort verschweißt wird.

Das Grundplattenelement ist vorzugsweise flach und streifenartig ausgebildet und kann einen sich abflachenden Abschnitt aufweisen. Dadurch, dass der erste Abschnitt breiter ausgebildet ist als der zweite Abschnitt des Verrastungselementes, kann das Verrastungselement aufgrund seiner Form in einem Gegenstück, insbesondere in einer entsprechenden Aufnahme eines Trägerelementes bzw. Mounts aufgenommen und dort z. B. formschlüssig bzw. zumindest teilweise formschlüssig befestigbar und/oder verrastbar sein.

Das Verrastungselement ist vorzugsweise eine stegartige Struktur, die sich aus der Oberfläche des Grundplattenelementes erhebt und vorzugsweise parallel zu einer Seite, insbesondere zur Längsseite des Grundplattenelementes orientiert ist. Es ist nicht zwingend erforderlich, dass sich das Verrastungselement über die gesamte Länge des Grundplattenelementes erstreckt. Dies kann aber in vorteilhafter Ausführung so vorgesehen sein.

Durch die erfindungsgemäße Lösung ergibt sich der Vorteil, dass durch das Verrastungselement des Schweißlaschenelements das Trägerelement des Befestigungssystems für eine Photovoltaikanlage einfach und sicher mit dem Schweißlaschenelement verbunden werden kann. Insbesondere kann eine Verrastung zur Befestigung des Trägerelements an dem Schweißlaschenelement erfolgen. Durch den Einsatz des Schweißlaschenelements ergibt sich des Weiteren der Vorteil, dass das Trägerelement der Photovoltaikanlage nicht mit der Dachbahn direkt in Kontakt kommt, so dass es keine Probleme hinsichtlich der Materialverträglichkeit gibt.

Vorteilhafterweise kann somit eine Installation der Photovoltaikanlage auf einer Dachbahn einfach und sicher sowie mit langer Standzeit ermöglicht werden.
Das Schweißlaschenelement kann auch direkt auf die Dachbahn verklebt werden, beispielsweise mittels eines werkseitig schon integrierten oder lokal aufzubringenden Klebstoffes oder Klebebandes jeglicher Art. Grundsätzlich ist auch eine Verklebung auf Bitumendächern (oder auf anderen Typen von Dachbahnen) möglich. Insbesondere kann vorgesehen sein, dass das Schweißlaschenelement abgerundete Formen bezogen auf den Querschnitt aufweist, so dass sich dadurch der Vorteil ergibt, dass die Dachbahn aufgrund der sanften Kanten des Schweißlaschenelements gegen Beschädigungen, etwa durch lokale Pressung von scharfen Kanten geschützt werden kann.

Ein weiterer Vorteil durch die Verwendung eines Schweißlaschenelements ergibt sich dadurch, dass die Auflagefläche des Trägerelements für das Befestigungssystem für eine Photovoltaikanlage dadurch verbessert werden kann, dass die Auflagefläche für das Trägerelement vergrößert wird, was insbesondere durch das Grundplattenelement erreicht werden kann und hierdurch die Flächenbelastung auf die Dachbahn bzw. die darunter liegende Wärmedämmung verringert werden kann. Durch den Einsatz eines Schweißlaschenelementes kann somit vorteilhafterweise eine flächige bzw. großflächige Verbindung mit z. B. der Oberfläche eines Daches hergestellt werden. Dadurch wird auch erreicht, dass sich die Größe von Pfützen durch stehengebliebenes Wasser auf dem Dach aufgrund einer Einsenkung der Wärmedämmung verkleinert.

Das Schweißlaschenelement kann insbesondere als Profilelement und/oder einstückig, insbesondere als extrudiertes Profilelement bzw. Endlosprofilelement, das je nach Bedarf abgelängt wird, ausgeführt sein. Dadurch ergibt sich der Vorteil, dass das Schweißlaschenelement einfach und kostengünstig bei zugleich hoher Fertigungsqualität hergestellt werden kann. Der Begriff einstückig ist dabei insbesondere breit auszulegen und insbesondere dahingehend zu verstehen, dass das Schweißlaschenelement nach außen als aus einem Stück bestehend erscheint.

Des Weiteren kann vorgesehen sein, dass der zweite Abschnitt des Verrastungselements eine abgerundete Form aufweist. Durch die Verwendung abgerundeter Formen ergibt sich der Vorteil, dass die Belastungsverteilung der auf das Verrastungselement einwirkenden Kräfte, insbesondere im montierten Zustand z. B. durch am Befestigungssystem angreifenden Windlasten oder dergleichen, gleichmäßig erfolgen kann.

Es ist möglich, dass der zweite Abschnitt bezogen auf den Querschnitt eine im Wesentlichen kreisrunde oder ovale Form aufweist. Diese Formgebungen sind vorteilhafterweise einfach herzustellen und besonders gut geeignet im Hinblick auf den Einsatzzweck.

Es kann ferner vorgesehen sein, dass der erste Abschnitt eine bezogen auf den Querschnitt im Wesentlichen rechteckige Form aufweist. Andere Formen des ersten Abschnitts sind ebenfalls grundsätzlich möglich.

Darüber hinaus ist denkbar, dass das Verrastungselement bezogen auf den Querschnitt eine im Wesentlichen baumartige Form aufweist.

Außerdem ist möglich, dass das Schweißlaschenelement zumindest teilweise aus einem UV-stabilen Thermoplast, insbesondere TPO oder PVC oder dergleichen besteht. Es ist vorteilhaft, wenn das Schweißlaschenelement aus dem gleichen UV-stabilen Material besteht wie z. B. die Dachbahn, um beides auf der Baustelle homogen miteinander verschweißen zu können. Eine Verschwei-βung kann beispielsweise mit einem Handschweißgerät oder mittels eines Schweißautomaten erfolgen. Eine manuelle Verschweißung mittels eines Handschweißgerätes hat jedoch insbesondere den Vorteil, dass die Schweißfläche wesentlich näher am Mount ausgebildet werden kann und diesen somit gegen ein Abheben besser schützt.

Des Weiteren kann vorgesehen sein, dass das Schweißlaschenelement zumindest teilweise ein metallisches Inlay oder ein Faserverbund-Inlay aufweist, mittels dessen die Struktur des Schweißlaschenelements verstärkbar ist. Durch die Verwendung eines metallischen Inlays kann das Schweißlaschenelement verstärkt ausgeführt werden, so dass seine mechanische Belastbarkeit erhöht werden kann. Ein Einsatz eines mechanischen Inlays ist stets dann vorteilhaft, wenn es die Belastungssituation erfordert, etwa dann, wenn die Steifigkeit des Schweißlaschenelementes im Vergleich zu einem Schweißlaschenelement aus z. B. Vollkunststoff erhöht werden soll.

Außerdem kann vorgesehen sein, dass das Schweißlaschenelement mit wenigstens einem Pinelement verbindbar ist und/oder wenigstens ein Pinelement aufweist, wobei mittels des Pinelementes das Schweißlaschenelement mit einem weiteren Element eines Befestigungssystems für eine Photovoltaikanlage verbindbar ist. Das weitere Element eines Befestigungssystems für eine Photovoltaikanlage kann insbesondere ein Trägerelement bzw. ein Mount sein. Das Schweißlaschenelement kann somit mit einem Pinelement, insbesondere einem Pin wie einem Bolzen, einem Clip oder dergleichen mittig auf halber Länge der Befestigungsstrecke, insbesondere der Nutlänge, mit dem Trägerelement bzw. Mount verbunden werden, um ein Herausschieben zu vermeiden, ohne zugleich differentielle Bewegungen gänzlich zu verhindern, sondern weiterhin zu ermöglichen.

Es ist ferner denkbar, dass die Oberfläche des Verrastungselementes zumindest teilweise mit einer Gleitschicht versehen ist. Durch die Verwendung einer Gleitschicht ergibt sich der Vorteil, dass differentielle Bewegungen bzw. Ausgleichsbewegungen aufgrund unterschiedlicher Ausdehnungskoeffizienten von Schweißlaschenelement und z. B. Mount etwa in Folge von Temperaturänderungen einfacher ausgeglichen werden können.

Des Weiteren betrifft die vorliegende Erfindung ein Trägerelement zur Verbindung mit einem Schweißlaschenelement mit den Merkmalen des Anspruchs 10. Danach ist vorgesehen, dass ein Trägerelement zur Verbindung mit einem Schweißlaschenelement nach einem der Ansprüche 1 bis 9 bereitgestellt wird, wobei das Trägerelement derart beschaffen ist, dass es zur Verbindung mit dem Schweißlaschenelement nach Art eines Gegenstücks vorgesehen und geeignet ist, wobei das Trägerelement wenigstens eine Nut aufweist, die mit dem Verrastungselement des Schweißlaschenelements verbindbar ist.

Es kann vorgesehen sein, dass das Trägerelement mit wenigstens einer Anzahl von Nuten zur Aufnahme der Verrastungselemente des Schweißlaschenelements versehen ist, die der der Anzahl der Verrastungselemente entspricht.

Darüber hinaus ist möglich, dass die Nut derart ausgebildet ist, dass das Verrastungselement des Schweißlaschenelements formschlüssig oder zumindest teilweise formschlüssig in der Nut halterbar ist.

Des Weiteren ist denkbar, dass die wenigstens eine Nut bodenseitig des Trägerelementes angeordnet ist und wobei die wenigstens eine Nut sich an einer Längsseite des Trägerelementes und/oder an mindestens einer Schmalseite des Trägerelementes befindet.

Darüber hinaus betrifft die vorliegende Erfindung ein Befestigungssystem für eine Photovoltaikanlage mit den Merkmalen des Anspruchs 14. Danach ist vorgesehen, dass ein Befestigungssystem für eine Photovoltaikanlage wenigstens ein Trägerelement und wenigstens ein Schweißlaschenelement umfasst, wobei das Trägerelement ein Trägerelement gemäß einem der Ansprüche 10 bis 13 und wobei das Schweißlaschenelement wenigstens ein Schweißlaschenelement gemäß einem der Ansprüche 1-9 ist.

Außerdem betrifft die vorliegende Erfindung ein Verfahren zur Montage eines Befestigungssystems mit den Merkmalen des Anspruchs 15. Danach ist vorgesehen, dass bei einem Verfahren zur Montage eines Befestigungssystems für eine Photovoltaikanlage, insbesondere eines Befestigungssystems für eine Photovoltaikanlage gemäß nach Anspruch 14, ein Trägerelement, insbesondere ein Trägerelement gemäß einem der Ansprüche 10 bis 13 mit wenigstens einem Schweißlaschenelement, insbesondere einem Schweißlaschenelement gemäß einem der Ansprüche 1 bis 9, zusammengefügt wird und das so zusammengefügte Befestigungssystem für eine Photovoltaikanlage, insbesondere das Befestigungssystem für eine Photovoltaikanlage gemäß nach Anspruch 14, vorzugsweise mit seinem wenigstens einen Schweißlaschenelement zumindest teilweise mit dem Untergrund, insbesondere einer Dachbahn, verschweißt wird.

Weitere Einzelheiten und Vorteile der Erfindung sollen nun anhand eines in den Zeichnungen dargestellten Ausführungsbeispiels näher erläutert werden.

Es zeigen:
- Figur 1:: einen Querschnitt durch ein Schweißlaschenelement für ein Befestigungssystem einer Photovoltaikanlage gemäß der vorliegenden Erfindung;
- Figur 2:: eine schematische Detailansicht auf die Verbindung zwischen Schweißlaschenelement gemäß Figur 1 und einem Trägerelement;
- Figur 3:: eine schematische Frontansicht auf die Verbindung zwischen Schweißlaschenelement und Trägerelement;
- Figur 4:: eine schematische Seitenansicht auf das Trägerelement für ein Befestigungssystem gemäß der vorliegenden Erfindung;
- Figur 5:: eine Schnittdarstellung des Schnittes durch die Ebene A gemäß Figur 4;
- Figur 6:: eine schematische Detailansicht auf die Verbindung zwischen einem Schweißlaschenelement in einer weiteren Ausführungsform und einem Trägerelement;

- Figur 7:: eine schematische Detailansicht auf die Verbindung zwischen einem Schweißlaschenelement in einer weiteren Ausführungsform und einem Trägerelement;
- Figur 8:: eine schematische Detailansicht auf die Verbindung zwischen einem Schweißlaschenelement in einer weiteren Ausführungsform und einem Trägerelement; und
- Figur 9:: eine schematische Detailansicht auf die Verbindung zwischen einem Schweißlaschenelement in einer weiteren Ausführungsform und einem Trägerelement.

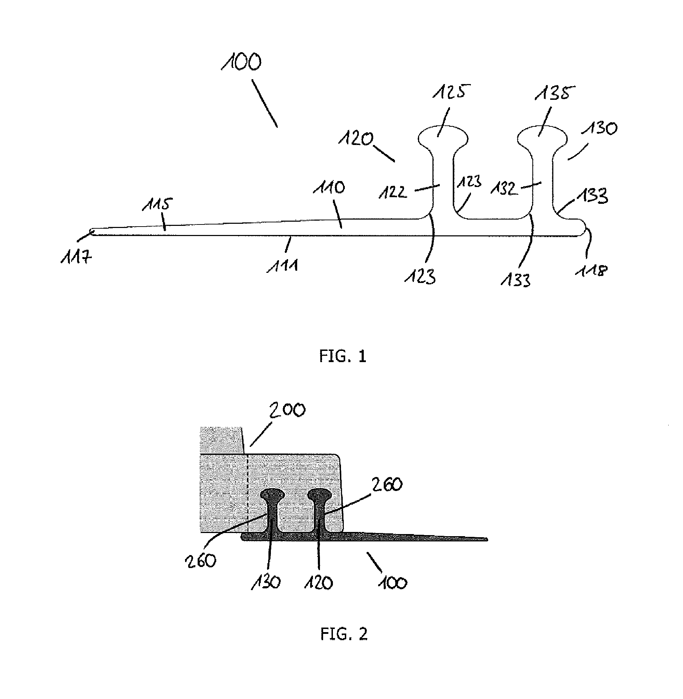

Figur 1 zeigt in schematischer Ansicht den Querschnitt eines Schweißlaschenelementes 100, hier als Schweißlasche 100 ausgeführt, mit wenigstens einem Grundplattenelement 110 und mit zwei Verrastungselementen 120, 130, die exzentrisch und randseitig, d.h. auf einer Seite (in Figur 1 auf der rechten Seite) bezogen auf den Querschnitt des Schweißlaschenelements 100 angeordnet sind.

Die beiden Verrastungselemente 120, 130 sind bezogen auf den jeweiligen Querschnitt identisch aufgebaut und weisen jeweils einen ersten grundplattenelementseitigen Abschnitt 122, 132 auf, der einen im Wesentlichen rechteckigen Durchmesser aufweist und der abgerundet, nämlich mittels Abrundungen 123, 133 sich aus der Oberseite des Grundplattenelements 110 des Schweißlaschenelements 100 erhebt. Kopfseitig der Verrastungselemente 120, 130 ist jeweils eine im Wesentlichen bezogen auf den Querschnitt elliptische Anformung 125, 135 vorgesehen, die jeweils den zweiten Abschnitt 125 bzw. 135 ausbildet.

Das Schweißlaschenelement 100 ist in der in Figur 1 gezeigten Ausführungsform einstückig ausgeführt und zwar aus einem extrudierbaren, thermoplastischen Kunststoff, der zugleich UV-stabil ist. Denkbar ist insbesondere, dass es sich bei dem Kunststoff um TPO bzw. PVC oder dergleichen handelt.

Die Bodenseite 111 des Grundplattenelementes 110 ist zur Auflage auf eine Dachbahn bestimmt. Der sich verjüngende Abschnitt 115 dient zur leichteren Verschweißung mit der Dachbahn.

Das Schweißlaschenelement 100 besteht aus dem gleichen UV-stabilen Material wie die nicht näher dargestellte Dachbahn, um beides auf der Baustelle homogen miteinander verschweißen zu können. Eine Verschweißung erfolgt vorzugsweise mit einem Handschweißgerät, so dass die Schweißfläche wesentlich näher am Mount ausgebildet werden kann und diesen somit gegen ein Abheben besser schützt. Grundsätzlich kann auch ein Schweißautomat zu Verschweißung eingesetzt werden.

Die Oberfläche der Verrastungselemente 125, 135 kann mit einer Gleitschicht versehen sein. Durch die Verwendung einer Gleitschicht ergibt sich der Vorteil, dass differentielle Bewegungen bzw. Ausgleichsbewegungen aufgrund unterschiedlicher Ausdehnungskoeffizienten von Schweißlaschenelement und z. B. Mount 200 (siehe z. B. Figur 2) etwa in Folge von Temperaturänderungen einfacher ausgeglichen werden können.

Das Schweißlaschenelement 100 weist ein Profil mit großzügig bemessenen Abrundungen 117, 118 der Enden des Grundplattenelementes 110 auf. Diese Abrundungen 117, 118 weisen großzügig bemessene Radien auf. Hierdurch wird verhindert, dass das Schweißlaschenelement 100 bzw. die Photovoltaikanlage im montierten Zustand beim sogenannten geringen bzw. leichten Einsinken in den flexiblen Dachaufbau eine zu große lokale Pressung entlang der Kanten des Schweißlaschenelementes 100 auf den Dachaufbau erzeugt. Somit wird langfristig eine Beschädigung z. B. der Dachbahn vermieden.

Figur 2 zeigt eine schematische Detailansicht auf die Verbindung zwischen dem Schweißlaschenelement 100 und dem Mount 200, der eine Ausführungsform mit zwei Nuten 260 ist.

Der Mount 200 weist demnach zwei bodenseitig und randseitig angeordnete Nuten 260 auf, in die die beiden Verrastungselemente 120 und 130 der Schweißlasche 100 (vgl. Figur 1) formschlüssig eingreifen.

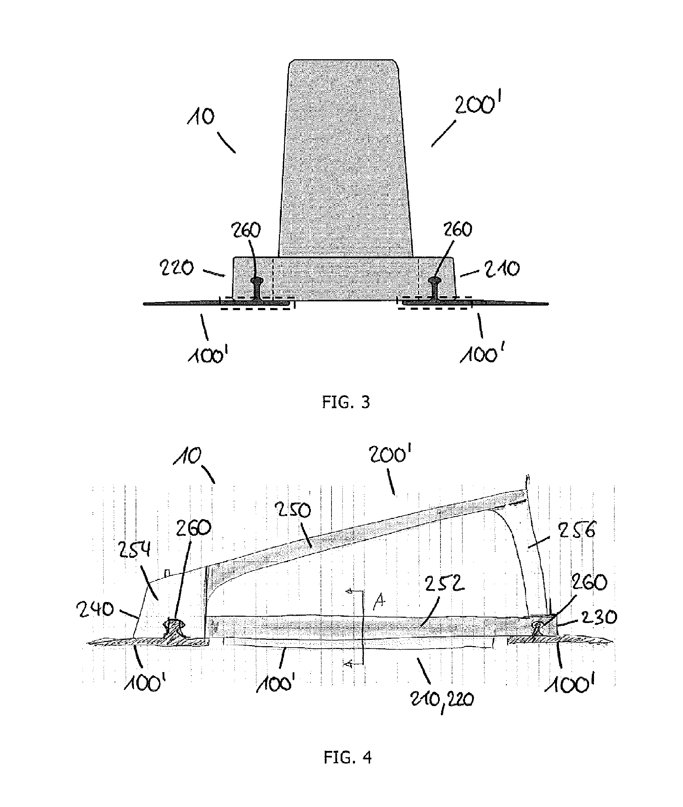

Figur 3 zeigt eine Frontansicht auf das Befestigungssystem 10 mit den Komponenten Schweißlaschen 100' und Mount 200', was eine leichte Abwandlung zu dem Ausführungsbeispiel gemäß Figur 1 und 2 darstellt. Jedoch ist das Solarpanel nicht gezeigt. Wie sich dies aus Figur 3 ergibt, verlaufen die Nuten 260 jeweils entlang den Längsseiten 210, 220 und erstrecken sich hier auch jeweils über die gesamte Länge der Längsseite 210 bzw. 220.

Um ein Verschieben zu vermeiden, kann jeweils ein nicht näher dargestellter Pin vorgesehen sein, der jeweils mittig der Längsseiten angeordnet ist und die Schweißlaschen 100' und den Mount 200' miteinander verbindet. Hierdurch wird weiterhin eine Ausgleichsbewegung zwischen den Schweißlaschen 100' und dem Mount 200' ermöglicht. Um die Ausgleichbewegung zu erleichtern, sind die Verrastungselement 120, 130 auf ihrer Oberfläche zusätzlich mit einer Gleitschicht versehen. Alternativ zur Anordnung von Pins kann vorgesehen sein, dass an den Schmalseiten ebenfalls Schweißlaschen vorgesehen sind, um ein Verschieben des Mounts 200' zu vermeiden.

Figur 4 zeigt das Trägerelement 200' bzw. einen Mount 200' für ein Befestigungssystem 10 einer Photovoltaikanlage gemäß der vorliegenden Erfindung in einer Ausführungsform mit jeweils einer Nut 260 zur Aufnahme der Verrastungselemente 120 einer Schweißlasche 100'. Das Trägerelement 200' weist einen rechteckigen Grundriss mit zwei Längsseiten 210, 220 und zwei Schmalseiten 230, 240 auf.

Dabei ist eine Schmalseite 230 eine sogenannte nördliche Seite 230, d.h. eine Seite, an der der Mount 200 die größte Höhe aufweist, also "hoch" ist. Die andere Schmalseite 240 ist eine sogenannte südliche Seite 240, d.h. eine Seite, an der der Mount 200' eine geringere Höhe aufweist, also "niedrig" ist. Der Winkel zwischen "tief und "hoch" ist der Neigungswinkel des Solarpanels. Es ist denkbar, am "tiefen" Kopfstück eine Art Gelenk einzufügen, um mit dem gleichen Bauteil mehrere verschiedene Neigungswinkel einstellen zu können, was ein Parameter für die Leistung des Solarpanels ist. Dem Umstand, dass der Mount bei verschiedenen Neigungswinkeln auf der Nordseite unterschiedlich "hoch" wird, muss mittels dem Neigungswinkel entsprechenden Nordstücken Rechnung getragen werden.

Durch die hierdurch erzielte Schräge weist der Mount 200' eine schräge Auflage 250 auf, die für die Auflage und Befestigung einer nicht näher dargestellten Solarzelle oder eines Solarpanels vorgesehen und bestimmt ist. Der Mount 200' ist somit ein sogenannter keilförmiger Mount 200'.

Das Trägerelement 200' kann aus mehreren Elementen bestehen, die einfach zu dem Trägerelement 200' zusammengefügt werden können. Beispielsweise kann vorgesehen sein, wie dies in Figur 4 gezeigt ist, dass ein Basiselement 252, ein Kopfstück 254 aus UV-beständigem Material, eine schräge Auflage 250 für das Solarpanel und ein Nordstück 256 für verschiedene Winkel vorgesehen ist und dass diese Komponenten miteinander zu einem Trägerelement 200' verbunden werden können. Das Trägerelement 200' wird mit Schweißlaschen 100', die jeweils in dieser Ausführungsform nur ein Verrastungselement 120' aufweisen, sich aber im Übrigen nicht von der in Figur 1 gezeigten Ausführungsform des Schweißlaschenelementes 100' unterscheiden, versehen und kann hierüber auf der Dachbahn verschweißt und damit befestigt werden.

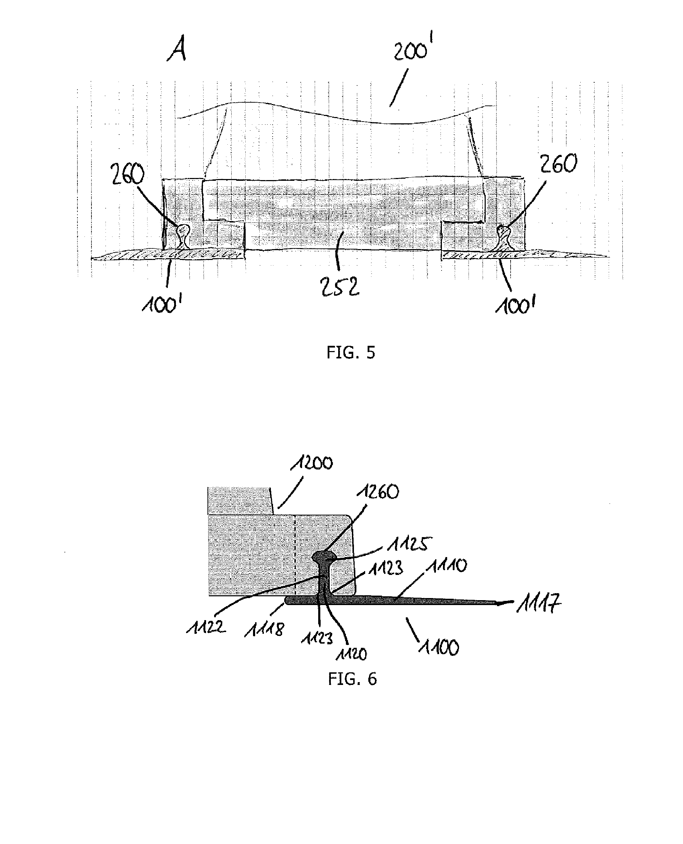

Figur 5 zeigt den Schnitt A durch das Trägerelement 200' gemäß Figur 4. Aus dem Schnitt A ergibt sich, dass auch entlang der Längsseiten Schweißlaschen 100' vorgesehen sind.

Die Schweißlaschen 100 bzw. 100' des Befestigungssystems 10 können grundsätzlich jeweils über die Schmalseiten 230 und 240 hinausragen. Grund dafür ist, dass keine bodenseitigen Kanten der Schmalseiten die Dachbahn berühren oder gar beschädigen können.

Denkbar ist aber auch, dass die Nuten 260 am Boden des Mounts 200 bzw. 200' nordseitig und/oder südseitig angeordnet sind. Weiter ist möglich, dass die Nuten 260 an allen Seiten des Mounts 200 bzw. 200' vorgesehen sind. Beispielsweise müssen die Längsnuten nicht zwingend über die gesamte Länge des Mounts 200 bzw. 200' angeordnet sein. Dies kann beispielsweise dadurch erreicht werden, wenn das Kopfstück als Abschluss der durchgehenden Nut im Boden des Trägerelementes dient. Diese Ausbildung kann dazu dienen, dass wenigstens auf ein quer angeordnetes Schweisslaschenelement verzichtet werden kann.

Insbesondere kann ebenfalls vorgesehen sein, dass die Elemente des Befestigungssystems 10, also insbesondere das Schweißlaschenelement 100 und das Trägerelement 200 bzw. 200' bzw. die Elemente des Trägerelementes 200 bzw. 200' (siehe auch Figur 4) derart gestaltet und beschaffen sind, dass sie möglichst ineinandergestapelt werden können und dass hierdurch das unmontierte Befestigungssystem 10 dicht gepackt zusammengelegt verpackt und verschickt werden kann.

Beispielsweise das sogenannte Kopfstück 254 des Mounts 200' gemäß Figur 4, d.h. die Front auf der niederen Südseite des Mounts 200' kann so materialisiert sein, dass es wie bei Dachbahnen mit einem integrierten UV-Schutz ausgerüstet ist. Da die übrigen Teile des Mounts 200' im langfristigen Einsatz regelmäßig nur Streulicht erhalten, ist es nicht zwingend erforderlich, an diesen Teilen ebenfalls Material mit einem integrierten UV-Schutz einzusetzen. Es kann daher für diese Teile kostengünstigeres Material eingesetzt werden.

Der Mount 200' kann zudem lichtreflektierend ausgeführt sein. Beispielsweise kann der Mount durchgängig aus weißem Material ausgeführt sein oder eine Oberfläche mit beständiger weißer Farbe aufweisen.

Figur 6 zeigt eine schematische Detailansicht auf die Verbindung zwischen dem Schweißlaschenelement 1100 und dem Mount 1200 gemäß einer weiteren Ausführungsform, der eine Ausführungsform mit einer Nut 1260 ist. Das Schweißlaschenelement 1100 weist ein Verrastungselement 1120 auf und ist im Übrigen vergleichbar den Verrastungselementen 100 bzw. 100' aufgebaut.

Das Verrastungselement 1120 weist einen ersten grundplattenelementseitigen Abschnitt 1122 auf, der einen im Wesentlichen rechteckigen Durchmesser aufweist und der abgerundet, nämlich mittels Abrundung 1123 sich aus der Oberseite des Grundplattenelements 1110 des Schweißlaschenelements 1100 erhebt. Kopfseitig des Verrastungselementes 1120 ist jeweils eine im Wesentlichen bezogen auf den Querschnitt elliptische Anformung 1125 vorgesehen, die jeweils den zweiten Abschnitt 1125 ausbildet.

Die Nut 1260 ist als Gegenstück zum Verrastungselement 1120 ausgebildet und nimmt das Verrastungselement 1120 formschlüssig auf.

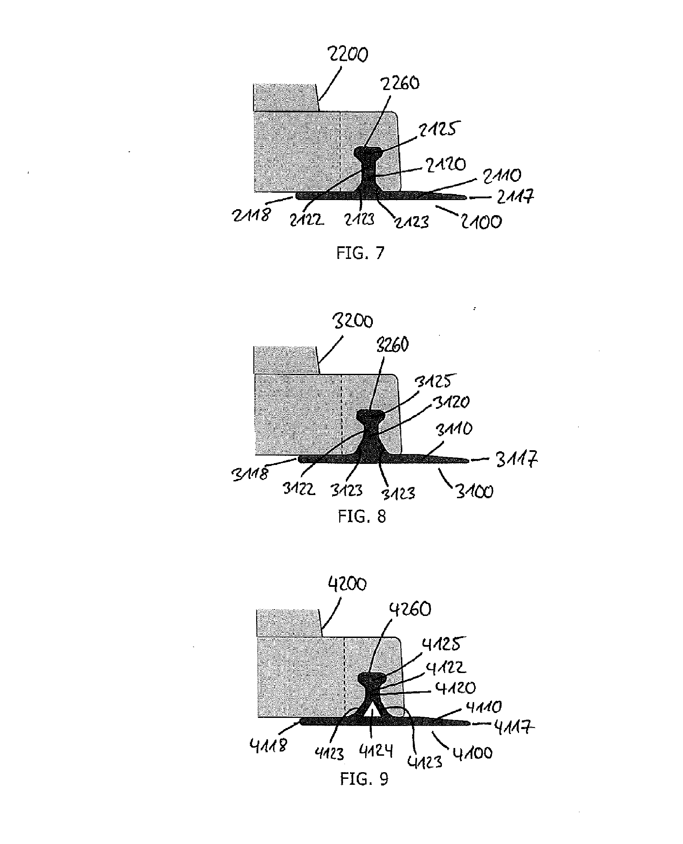

Figur 7 zeigt eine schematische Detailansicht auf die Verbindung zwischen dem Schweißlaschenelement 2100 und dem Mount 2200 gemäß einer weiteren Ausführungsform, der eine Ausführungsform mit einer Nut 2260 ist. Das Schweißlaschenelement 2100 weist ein Verrastungselement 2120 auf und ist im Übrigen vergleichbar den Verrastungselementen 100 bzw. 100' aufgebaut.

Das Verrastungselement 2120 weist einen ersten grundplattenelementseitigen Abschnitt 2122 auf, der einen im Wesentlichen rechteckigen Durchmesser aufweist und der sich nach unten hin verbreitert bzw. sich mittels Verbreiterungen 2123 aus der Oberseite des Grundplattenelements 2110 des Schweißlaschenelements 2100 erhebt. Kopfseitig des Verrastungselementes 2120 ist jeweils eine im Wesentlichen bezogen auf den Querschnitt knopfartige Anformung 2125 vorgesehen, die jeweils den zweiten Abschnitt 2125 ausbildet.

Die Nut 2260 ist als Gegenstück zum Verrastungselement 2120 ausgebildet und nimmt das Verrastungselement 2120 formschlüssig auf.

Figur 8 zeigt eine schematische Detailansicht auf die Verbindung zwischen dem Schweißlaschenelement 3100 und dem Mount 3200 gemäß einer weiteren Ausführungsform, der eine Ausführungsform mit einer Nut 3260 ist. Das Schweißlaschenelement 3100 weist ein Verrastungselement 3120 auf und ist im Übrigen vergleichbar den Verrastungselementen 100 bzw. 100' aufgebaut.

Das Verrastungselement 3120 weist einen ersten grundplattenelementseitigen Abschnitt 3122 auf, der einen im Wesentlichen prismenartigen Durchmesser aufweist und der sich nach unten hin verbreitert bzw. sich mittels Verbreiterungen 3123 aus der Oberseite des Grundplattenelements 3110 des Schweißlaschenelements 3100 erhebt. Wie sich dies aus dem Vergleich der Figuren 7 und 8 ergibt, sind die Verbreiterungen 3123 breiter bzw. größer ausgeführt als die Verbreiterungen 2123.

Kopfseitig des Verrastungselementes 3120 ist jeweils eine im Wesentlichen bezogen auf den Querschnitt knopfartige Anformung 3125 vorgesehen, die jeweils den zweiten Abschnitt 3125 ausbildet.

Die Nut 3260 ist als Gegenstück zum Verrastungselement 3120 ausgebildet und nimmt das Verrastungselement 3120 formschlüssig auf.

Figur 9 zeigt eine schematische Detailansicht auf die Verbindung zwischen dem Schweißlaschenelement 4100 und dem Mount 4200 gemäß einer weiteren Ausführungsform, der eine Ausführungsform mit einer Nut 4260 ist. Das Schweißlaschenelement 4100 weist ein Verrastungselement 4120 auf und ist im Übrigen vergleichbar den Verrastungselementen 100 bzw. 100' aufgebaut.

Das Verrastungselement 4120 weist einen ersten grundplattenelementseitigen Abschnitt 4122 auf, der einen im Wesentlichen prismenartigen Durchmesser aufweist und der sich nach unten hin verbreitert bzw. sich mittels Verbreiterungen 4123 aus der Oberseite des Grundplattenelements 4110 des Schweißlaschenelements 4100 erhebt. Der Querschnitt des Schweißlaschenelementes 4100 entspricht dem Querschnitt des Schweißlaschenelementes 3100, unterscheidet sich jedoch insofern, dass Schweißlaschenelement 4100 einen bezogen auf den Querschnitt dreieckigen Hohlraum 4124 bzw. eine Hohlprofilierung 4124 in Form eines Längsloches aufweist. Dieser Hohlraum 4124 bzw. Hohlprofilierung 4124 wirkt einer unerwünschten Materialanhäufung entgegen, wodurch der Vorteil erreicht wird, dass die Einhaltung eines präzisen Querschnitts aufgrund gleichmäßiger Abkühlung der Abschnitte des Schweißlaschenelementes 4100 erzielt werden kann.

Kopfseitig des Verrastungselementes 4120 ist jeweils eine im Wesentlichen bezogen auf den Querschnitt knopfartige Anformung 4125 vorgesehen, die jeweils den zweiten Abschnitt 4125 ausbildet.

Die Nut 4260 ist als Gegenstück zum Verrastungselement 4120 ausgebildet und nimmt das Verrastungselement 4120 formschlüssig auf.

Die in den Figuren 6, 7, 8 und 9 gezeigten Ausführungsformen von Schweißlaschenelementen 1100 bzw. 2100 bzw. 3100 bzw. 4100 weisen ebenso wie das in Figur 1 gezeigte Ausführungsbeispiel ein Profil mit großzügig bemessenen Abrundungen 1117, 1118 bzw. 2117, 2118 bzw. 3117, 3118 bzw. 4117, 4118 der Enden des Grundplattenelementes 1110 bzw. 2110 bzw. 3110 bzw. 4110 auf. Diese Abrundungen 1117, 1118 bzw. 2117, 2118 bzw. 3117, 3118 bzw. 4117, 4118 weisen großzügig bemessene Radien auf.

Hierdurch wird verhindert, dass das Schweißlaschenelement 1100 bzw. 2100 bzw. 3100 bzw. 4100 die Photovoltaikanlage im montierten Zustand beim sogenannten geringen bzw. leichten Einsinken in den flexiblen Dachaufbau eine zu große lokale Pressung entlang der Kanten des Schweißlaschenelementes 1100 bzw. 2100 bzw. 3100 bzw. 4100 auf den Dachaufbau erzeugt. Somit wird langfristig eine Beschädigung z. B. der Dachbahn vermieden.

## Patentansprüche

1. Schweißlaschenelement (100, 100', 1100, 2100, 3100, 4100), insbesondere ein Schweißlaschenelement (100, 100', 1100, 2100, 3100, 4100) für ein Befestigungssystem (10) für eine Photovoltaikanlage, mit wenigstens einem Grundplattenelement (110, 1110, 2110, 3110, 4110) und wenigstens einem Verrastungselement (120, 130, 1120, 2120, 3120, 4120), wobei das Verrastungselement (120, 130, 1120, 2120, 3120, 4120) wenigstens einen ersten Abschnitt (122, 132, 1122, 2122, 3122, 4122) und wenigstens einen zweiten Abschnitt (125, 135, 1125, 2125, 3125, 4125) aufweist, wobei der erste Abschnitt (122, 132, 1122, 2122, 3122, 4122) grundplattenelementseitig angeordnet ist und wobei der erste Abschnitt (122, 132, 1122, 2122, 3122, 4122) eine erste Breite bezogen auf den Querschnitt aufweist, wobei der zweite Abschnitt (125, 135, 1125, 2125, 3125, 4125) kopfseitig des Verrastungselements (120, 130, 1120, 2120, 3120, 4120) angeordnet ist und wobei der zweite Abschnitt (125, 135, 1125, 2125, 3125, 4125) eine zweite Breite bezogen auf den Querschnitt aufweist, wobei die zweite Breite eine größere Ausdehnung hat als die erste Breite.

2. Schweißlaschenelement (100, 100', 1100, 2100, 3100, 4100) nach Anspruch 1,
**dadurch gekennzeichnet,dass** das Schweißlaschenelement (100, 100', 1100, 2100, 3100, 4100) als Profilelement, insbesondere als einstückiges, vorzugsweise als extrudiertes Profilelement ausgeführt ist.

3. Schweißlaschenelement (100, 100', 1100) gemäß Anspruch 1 oder 2,
**dadurch gekennzeichnet,dass** der zweite Abschnitt (125, 135, 1125) des Verrastungselements (120, 130, 1120) eine abgerundete Form aufweist, wobei der zweite Abschnitt (125, 135, 1125) vorzugsweise bezogen auf den Querschnitt eine im Wesentlichen kreisrunde oder ovale Form aufweist.

4. Schweißlaschenelement (100, 100', 1100, 2100) nach einem der vorhergehenden Ansprüche,
**dadurch gekennzeichnet, dass** der erste Abschnitt (122, 132, 1122, 2122) eine bezogen auf den Querschnitt im Wesentlichen rechteckige Form aufweist.

5. Schweißlaschenelement (100, 100', 1100, 2100, 3100, 4100) nach einem der vorhergehenden Ansprüche,
**dadurch gekennzeichnet, dass** das Verrastungselement (120, 130, 1120, 2120, 3120, 4120) bezogen auf den Querschnitt eine im Wesentlichen baumartige Form aufweist.

6. Schweißlaschenelement (100, 100', 1100, 2100, 3100, 4100) nach einem der vorhergehenden Ansprüche,
**dadurch gekennzeichnet, dass** das Schweißlaschenelement (100, 100', 1100, 2100, 3100, 4100) zumindest teilweise aus einem UV-stabilen Thermoplast, insbesondere TPO oder PVC oder dergleichen besteht.

7. Schweißlaschenelement (100, 100', 1100, 2100, 3100, 4100) nach einem der vorhergehenden Ansprüche,
**dadurch gekennzeichnet, dass** das Schweißlaschenelement (100, 100', 1100, 2100, 3100, 4100) zumindest teilweise ein metallisches Inlay oder Faserverbund-Inlay aufweist, mittels dessen die Struktur des Schweißlaschenelements (100, 100', 1100, 2100, 3100, 4100) verstärkbar ist.

8. Schweißlaschenelement (100, 100', 1100, 2100, 3100, 4100) nach einem der vorhergehenden Ansprüche,
**dadurch gekennzeichnet, dass** das Schweißlaschenelement (100, 100', 1100, 2100, 3100, 4100) mit wenigstens einem Pinelement verbindbar ist und/oder wenigstens ein Pinelement aufweist, wobei mittels des Pinelementes das Schweißlaschenelement (100, 100', 1100, 2100, 3100, 4100) mit einem weiteren Element eines Befestigungssystems (10) für eine Photovoltaikanlage verbindbar ist.

9. Schweißlaschenelement (100, 100', 1100, 2100, 3100, 4100) nach einem der vorhergehenden Ansprüche,
**dadurch gekennzeichnet, dass** die Oberfläche des Verrastungselementes (120, 130, 1120, 2120, 3120, 4120) zumindest teilweise mit einer Gleitschicht versehen ist.

10. Trägerelement (200, 200', 1200, 2200, 3200, 4200), insbesondere Trägerelement (200, 200', 1200, 2200, 3200, 4200) für ein Befestigungssystem (10) für eine Photovoltaikanlage, zur Verbindung mit einem Schweißlaschenelement (100, 100', 1100, 2100, 3100, 4100) nach einem der vorhergehenden Ansprüche, wobei das Trägerelement (200, 200', 1200, 2200, 3200, 4200) derart beschaffen ist, dass es zur Verbindung mit dem Schweißlaschenelement (100, 100', 1100, 2100, 3100, 4100) nach Art eines Gegenstücks vorgesehen und geeignet ist, wobei das Trägerelement (200, 200', 1200, 2200, 3200, 4200) wenigstens eine Nut (260, 1260, 2260, 3260, 4260) aufweist, die mit dem Verrastungselement (120, 130, 1120, 2120, 3120, 4120) des Schweißlaschenelements (100, 100', 1100, 2100, 3100, 4100) verbindbar ist.

11. Trägerelement (200, 200', 1200, 2200, 3200, 4200) nach Anspruch 10,
**dadurch gekennzeichnet, dass** das Trägerelement (200, 200', 1200, 2200, 3200, 4200) mit wenigstens einer Anzahl von Nuten (260, 1260, 2260, 3260, 4260) zur Aufnahme der Verrastungselemente (120, 130, 1120, 2120, 3120, 4120) des Schweißlaschenelements (100, 100', 1100, 2100, 3100, 4100) versehen ist, die der Anzahl der Verrastungselemente (120, 130, 1120, 2120, 3120, 4120) entspricht.

12. Trägerelement (200, 200', 1200, 2200, 3200, 4200) nach Anspruch 10 oder 11,
**dadurch gekennzeichnet, dass** die wenigstens eine Nut (260, 1260, 2260, 3260, 4260) derart ausgebildet ist, dass das Verrastungselement (120, 130, 1120, 2120, 3120, 4120) des Schweißlaschenelements (100, 100', 1100, 2100, 3100, 4100) formschlüssig oder zumindest teilweise formschlüssig in der Nut (260, 1260, 2260, 3260, 4260) halterbar ist.

13. Trägerelement (200, 200', 1200, 2200, 3200, 4200) nach einem der Ansprüche 10 bis 12,
**dadurch gekennzeichnet,dass** die wenigstens eine Nut (260, 1260, 2260, 3260, 4260) bodenseitig des Trägerelementes angeordnet ist und wobei die wenigstens eine Nut (260, 1260, 2260, 3260, 4260) sich an einer Längsseite (210, 220) des Trägerelementes (200, 200', 1200, 2200, 3200, 4200) und/oder an mindestens einer Schmalseite (230, 240) des Trägerelementes (200, 200', 1200, 2200, 3200, 4200) befindet.

14. Befestigungssystem (10) für eine Photovoltaikanlage, umfassend wenigstens ein Trägerelement (200, 200', 1200, 2200, 3200, 4200) und wenigstens ein Schweißlaschenelement (100, 100', 1100, 2100, 3100, 4100), wobei das Trägerelement (200, 200', 1200, 2200, 3200, 4200) ein Trägerelement (200, 200', 1200, 2200, 3200, 4200) gemäß einem der Ansprüche 10 bis 13 und wobei das Schweißlaschenelement (100, 100', 1100, 2100, 3100, 4100) wenigstens ein Schweißlaschenelement (100, 100', 1100, 2100, 3100, 4100) gemäß einem der Ansprüche 1-9 ist.

15. Verfahren zur Montage eines Befestigungssystems (10) für eine Photovoltaikanlage, insbesondere eines Befestigungssystems (10) für eine Photovoltaikanlage gemäß nach Anspruch 14, wobei ein Trägerelement (200, 200', 1200, 2200, 3200, 4200), insbesondere ein Trägerelement (200, 200', 1200, 2200, 3200, 4200) gemäß einem der Ansprüche 10 bis 13 mit wenigstens einem Schweißlaschenelement (100, 100', 1100, 2100, 3100, 4100), insbesondere einem Schweißlaschenelement (100, 100', 1100, 2100, 3100, 4100) gemäß einem der Ansprüche 1 bis 9, zusammengefügt wird und wobei das so zusammengefügte Befestigungssystem (10) für eine Photovoltaikanlage, insbesondere das Befestigungssystem (10) für eine Photovoltaikanlage gemäß nach Anspruch 14, vorzugsweise mit seinem wenigstens einen Schweißlaschenelement (100, 100', 1100, 2100, 3100, 4100) zumindest teilweise mit dem Untergrund, insbesondere einer Dachbahn, verschweißt wird.
